**Europäisches Patentamt**

(19) **European Patent Office**

**Office européen des brevets**

(11) **EP 0 770 448 B1**

(12) **EUROPEAN PATENT SPECIFICATION**

(45) Date of publication and mention
of the grant of the patent:
**16.12.1998 Bulletin 1998/51**

(51) Int. Cl.$^6$: **B23K 26/00**, B23K 26/14

(21) Application number: **95116959.8**

(22) Date of filing: **27.10.1995**

(54) **Method and apparatus for laser cutting materials**

Verfahren und Vorrichtung zum Schneiden von Materialien mittels Laser

Procédé et appareil pour la découpe au laser de matériaux

(84) Designated Contracting States:
**AT BE CH DE FR GB LI NL SE**

(43) Date of publication of application:
**02.05.1997 Bulletin 1997/18**

(73) Proprietor:
**E.I. DU PONT DE NEMOURS AND COMPANY**
**Wilmington Delaware 19898 (US)**

(72) Inventors:
• **Kobsa, Henry**
**Greenville, Delaware 19807 (US)**

• **Kleine, Klaus**
**Wilmington, Delaware 19804 (US)**

(74) Representative:
**Pistor, Wolfgang, Dr. Dipl.-Chem. et al**
**Patentanwälte**
**Lippert, Stachow, Schmidt und Partner**
**Frankenforster Strasse 135-137**
**51427 Bergisch Gladbach (DE)**

(56) References cited:
**US-A- 4 808 789      US-A- 5 059 764**
**US-A- 5 168 143      US-A- 5 406 577**

Note:  Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

The subjects of the invention are a method for laser cutting a manufactured object by means of a focused high energy laser beam and a system for precision processing and machining of materials.

The method of cutting manufactured objects by means of a focused laser beam is in general known in the art. Johnson et al., US patent 5,057,664, describe the use of a diode pumped, Q-switched YAG laser for cutting very thin (about 1 $\mu$m or less) films of materials having a high melting point, such as nichrome or tantalum nitride, as used for thin-film resistors. They report a trim profile with a good smoothness.

Basu et al., US patent 4,890,289, describe a high energy diode pumped solid state laser arrangement applicable e.g. for laser cutting. To avoid distortion of the laser gain material by heat generated together with the radiation, they propose to arrange the pumping diodes in a certain distance from the laser material, to guide and concentrate the pumping radiation by means of fiber optics, and to use a reciprocating slab of laser material. Such an arrangement needs obviously rather sophisticated mechanical and control means.

The use of fiber optics is totally unsuitable for precision cutting since the fiber optics very badly degrade the beam quality. $M^2$ (as defined below) for a fiber delivered beam is typically in the 50 to 150 range whereas $M^2$ less than 2 is needed for precision cutting. Since $M^2$ enters the equation for brightness (as defined below) as its square in the denominator, fiber coupled lasers fail the necessary brightness by orders of magnitude.

Further, slab lasers are less preferred than rod lasers for precision cutting since they often show astigmatism which also prevents $M^2$ from being in the desired range.

Baer, US patent 5,059,764, employs an end-pumped, fiber-coupled, solid state rod laser pumped by laser diodes, for application to semiconductor manufacture and repair. The beam width in this device can be as low as 1 - 2 $\mu$m, and the pulses have typically an energy of 30 $\mu$J. Single pulses are employed to ablate undesired links in semiconductor circuits.

The methods of Johnson et al. and Baer described above are useful for shaping of rather thin objects like metal layers in semiconductor circuits and the material is removed mainly by ablation. The method of Basu et al. is generally suitable for thicker materials but can only make relatively coarse cuts, i.e. about ten times wider than desirable. There remains a need for a method to make precision microcuts in thicker manufactured objects, i. e. of cuts having a high aspect ratio L/D between material thickness L and cut width D. Kobsa et al., US patent 5,168,143, have employed a laser beam to cut complex capillaries in spinneret plates. Such plates are typically of metal and are 0.2 to 1.0 mm thick, although they can be as thin as 0.1 mm or as thick as 2.0 mm. In this process the focused laser energy creates a pool of molten material between the face (upper) and the bottom (lower) surface of the plate and the molten metal is expelled by means of a pressurized fluid flowing coaxially with the laser beam. The laser beam is substantially a single-mode beam and is focused to a spot size of less than 100 $\mu$m on a location above the upper surface of the plate. The laser is preferably pumped with xenon flash tubes and operated at a repetition frequency between 100 and 200 Hz. By this method, cuts about 40 $\mu$m wide and with satisfactory smooth edges could be made in metal and ceramic plates of some 0.2 to 1.3 mm thickness.

Specific to this method is the occurrence of a heat affected zone (HAZ) at the surface of the kerf. This may be caused by molten material which was not removed by the fluid jet but solidified due to heat dissipation in the manufactured object, by recrystallization, by the occurrence of cracks due to thermal stress or by other effects. The thickness of the HAZ created by known methods of laser cutting depends on material and process parameters and is typically 25 to 50 $\mu$m. Generally the material in the HAZ has different physical and chemical properties than the bulk material. Thus it may happen e. g. that in use of the manufactured object the HAZ is less resistant against mechanical wear and/or chemical attack than the bulk material and the dimension of the cut changes rapidly in use. This is obviously a disadvantage.

Therefore it is the object of the present invention to improve the laser cutting process in such manner that the thickness of the HAZ is significantly diminished.

SUMMARY OF THE INVENTION

According to the invention there is provided a method for cutting through a manufactured object with a thickness of about 0.1 to 2.0 mm that includes the steps of focusing a laser beam to a plane between the upper and the lower surface of said object and expelling the material molten and/or vaporized by said laser beam from the lower surface by means of a pressurized fluid flowing coaxially with said beam, the improvement comprising using a diode pumped solid state laser with an average brightness of greater than $10^{12}$ [W/m$^2$*sr] and a peak brightness of greater than $10^{13}$ [W/m$^2$*sr].

The invention further provides a system according to claim 12.

The average brightness $B_{av}$ depends on the laser power, and on the cross section as well as on the solid angle of the laser beam in its focal plane. It is here defined for a pulsed laser by the following formula:

$$B_{av} = (n^*E) / (A^*Q) \ [W/m^2{}^*sr],$$

where

E [J] = energy per pulse,
n [1/s] = repetition rate,
A [$m^2$] = cross section of the beam in the focal plane,
Q [sr] = solid angle encircled by the beam at the waist

For a CW laser, n*E has to be replaced by the power in [W].
In units which can be measured easier this becomes

$$B_{av} = (4/\pi)^2 \ {}^* (n^*E) / (W_o{}^2{}^*\theta^2) \ [W/m^2{}^*sr],$$

where

$W_o$ [m] = diameter of the beam at the waist,
$\theta$[rad] = divergence of the laser beam.

The divergence $\theta$ can be determined as the ratio between the diameter of the collimated beam before entering the focusing lens and the focal length of this lens.

Since $W_o$ is more conveniently measured in $\mu$m, this becomes

$$B_{av} = 10^{12}{}^*(4/\pi)^2 \ {}^* (n^*E) / (W_o{}^2{}^*\theta^2) \ [W/\mu m^2{}^*sr].$$

The peak brightness is obtained when dividing $B_{av}$ by the duty cycle $\rho$ :

$$B_p = B_{av} / \rho \ [W/m^2{}^*sr].$$

The duty cycle means e. g. for equal and essentially rectangular laser pulses the ratio of the duration of a laser pulse to the time interval between start of one pulse and start of the next.

It follows that in order to obtain a high brightness one has either to increase the pulse energy E or to decrease the product $W_o{}^*\theta$, which describes the beam quality, or both. The minimum value for Wo*$\theta$ is equal to the diffraction limit 4 $\lambda/\pi$, where $\lambda$ is the wavelength of the laser radiation. For further discussion a beam quality factor $M^2$ is used, which is the ratio between the actual and the minimum value of ($W_o{}^*\theta$) and is defined in the equation:

$$W_o{}^*\theta = M^2{}^*4^*\lambda/ \ \pi. \ [m^*rad]$$

Using this we get for the average brightness

$$B_{av} = (n^*E) / (\lambda^2{}^*(M^2)^2) = 0.883^*10^{12}{}^*n^*E / (M^2)^2 \ [W/m^2{}^*sr]$$

for the Nd:YAG laser with $\lambda$ = 1.064 $\mu$m.

This means that in order to obtain high brightness, $M^2$ must be as low as possible. There are a number of different means to control $M^2$, e. g.:

- Selection of a single mode by use of one or more apertures.

- Correction of thermal lensing by either using one or more lenses inside the laser cavity or using one or two curved end mirrors.

- Minimization of thermal loading of the laser crystal to avoid higher order distortions such as astigmatism, which are difficult or impossible to correct.

DETAILED DESCRIPTION OF THE INVENTION

Pulsed lasers are preferred in the method according to the invention because they allow to achieve a very high peak brightness without excessive thermal load on the system.

It is important that the temperature distribution in the crystal be as symmetrical as possible. This is often easier to accomplish in a rod than in a slab shaped crystal. In the most preferred embodiment a rod crystal is side-pumped by a number (such as five) of arrays of laser diode bars, to achieve a uniform temperature distribution which will vary radially but varies as little as possible circumferentially.

To get a high pulse energy, it is preferred in the method according to the invention use of a side pumped laser is also preferable.

Further preferred in the method according to the invention is to modulate the intensity of the laser beam by an attenuating means which is arrangend in the optical path between the laser crystal and the working station, preferably immediately after the crystal. This allows to run the laser at a constant average power level and to adjust the effective average power of the laser beam at the working station to the level desired for the specific application. This means that the unavoidable thermal lensing, which is caused by the radial non-uniformity of refractive index within the crystal, which again is caused by the radial temperature gradient, is constant and can be effectively corrected by an appropriate design of the resonator cavity.

Further preferred is to monitor the distance between the focusing lens and the surface of the workpiece and to control it to a constant value. Thus the influence of unevenness or bends in the workpiece can be eliminated. Such control is preferably achieved by a distance sensor which provides a signal to the control unit of an adequate three coordinate workstation.

When cutting thick objects it must be kept in mind that the minimum cross section area of the beam and therefore the highest fluence is limited to just one plane. Over and under this plane the beam is wider as a consequence of the focusing optics. This is described by the so called Rayleigh length $Z_r$ which is the distance over which the beam diverges to twice its minimum area (at the waist) and is given by

$$Z_r = W_o{}^2 * \pi / (M^2 * \lambda) = 4 W_o / \theta,$$

where $Z_r$, $W_o$, and $\lambda$ are measured in the same units.

Typically, material up to about two $Z_r$ thick or slightly thicker can be cut with good quality. That means that $Z_r$ is preferably greater than 0.4 times the material thickness.

The Rayleigh length can be controlled by selecting the appropriate beam expander. Expanding the beam more gives a smaller beam waist $W_o$, i. e. a smaller divergence $\theta$ but also a smaller Rayleigh length. On the other hand, the smaller the beam diameter at the waist $W_o$ is, the narrower can be the cutting kerf. When cutting material about two $Z_r$ thick, the achievable kerf width is about 1.4 times $W_o$.

Further preferred is to operate the laser cutting equipment with a repetition frequency n of at least 500 [1/s].

The cutting method according to the invention can be applied to a variety of materials. Preferred are metals like stainless steel, copper, aluminium, even high melting point metals like tungsten, and ceramic materials like alumina (e. g. KERAMTEC® 708 of Hoechst), silicon carbide, or zirconia. Also composite materials like carbon fiber reinforced thermosetting resins, carbon fiber reinforced carbon, or clad materials like stainless steel coated with a ceramic layer can be cut.

It was found that the cutting surfaces obtained by the new method were very smooth and had a very thin HAZ, typically not thicker than 4 $\mu$m. This is due to the very low value of $M^2$ for the laser cutting equipment according to the invention and to adjusting the effective power per pulse to a level which is just adequate for cutting but does not deposit excess energy on the workpiece. When cutting brittle materials like ceramics it was found that, contrary to the results with prior art methods, there were substantially no microcracks present in the cut surface.

The new method can be applied in different technical fields, e. g. for precision cutting of metal sheets in the automobile industry, in preparing precision ceramic parts for the electrical and electronics industry, spinneret plates for the fibers industry, fuel injection nozzles for diesel engines.

The invention comprises also a laser based system for precision processing and machining of materials and workpieces. This system comprises a solid state laser light source comprising a crystal, preferably a Nd:YAG crystal, a laser cavity defined by two end mirrors, a multiplicity of diode bars arranged around the crystal for pumping it, and optical elements for improving the beam quality. Such optical elements are generally known and may be apertures for selecting single modes (e. g. the $TEM_{oo}$ mode), lenses, or curved mirrors.

The system further comprises a lens system for expanding, collimating, and focusing the laser beam. The focusing lens may be located close to the collimator or at some distance to leave space for other parts of the system, like beam attenuators or beam splitters for beam diagnostic.

The system further comprises a workstation for holding and moving a workpiece with respect to the laser beam.

This workstation holds the workpiece, e. g. by clamping elements, and has means to move the workpiece in all three directions independently.

The system further comprises a cutting nozzle for directing a jet of a pressurized fluid to the surface of the workpiece held in the workstation. This fluid is preferably a gas like oxygen, argon, carbon dioxide, or nitrogen.

The system according to the invention provides a laser beam which has an average brightness of more than $10^{12}$ [W/m$^2$*sr] and a peak brightness of more than $10^{13}$ [W/m$^2$*sr].

Particularly preferred is a cylindrical rod shaped crystal.

An array of pumping diodes is arranged close to the crystal. The pumping diodes are preferably disposed around the perimeter of the crystal. This way a greater number of diodes, e.g. 20 to 160, can be arranged close to the crystal, each having an output pumping radiation power of 20 to 100 W, so that a pumping power of several kW can be achieved. At the same time the pumping energy is more uniformly distributed over the crystal and thermal stress is lower. For good uniformity an odd number, such as five or seven, of diode bar array lines should be symmetrically arranged around the laser rod.

An optical path is defined in the system which extends from the laser crystal to the working station. Optical elements like mirrors, lenses, or beam splitters can be present in the optical path as usual in the art.

Preferably a beam attenuator is present in the optical path external to the laser cavity which allows to modulate the intensity of the laser beam. This may be e. g. a grey filter of varying density, or a semipermeable mirror of varying reflectivity, which can be moved in a direction essentially perpendicular to the optical path. Particularly preferred is a diffractive laser beam attenuator, also named diffractive beam splitter. It is also advantageous if the beam splitter is continuously variable over a greater range so that it can be set to any beam power in this range. These requirements are met e. g. by the Optical Power Modulator (OPM) 121-45021 sold by.Gentec Inc,. Sainte-Foy, Quebec, Canada.

The beam attenuator can conveniently be located at any place between the outcoupling mirror of the laser and the final focusing lens. E. g. it can be located immediately after the outcoupling mirror or be inserted into the lens system after the beam has been collimated.

It was found that this laser system could be arranged in relative small containment because of the compact structure of the diode side pumped laser and the moderate power consumed. Therefore it is preferred to enclose the system in an outer housing, the doors of which are interlocked with the laser power supply. This setup can then be treated as a class 1 laser.

## DESCRIPTION OF THE MOST PREFERRED EMBODIMENT

The laser cutting system is based on a laser diode pumped Nd:YAG solid state laser. The laser is pumped by 80 laser diode bars of 50 W each. These diode bars are arranged in 5 arrays of 4 by 4 alongside the perimeter of the laser rod. The average laser power is 30 W. The pulse length is 150 $\mu$s and the repetition rate 1000 [1/s] which corresponds to a duty cycle of 0.15. The diodes and the laser rod are chilled by a water-to-air cooler. A beam quality of $M^2 = 1.2$ is obtained by applying the corrective measures described above. The beam passes first a beam attenuator as described above. Then it goes through a beam expander which, dependent on the application, expands the beam to a diameter of 5 to 20 mm and collimates it. Next an additional beam splitter mirror separates 0.1 % of the beam for beam diagnosis and reflects 99.9 % of it to the optical system focusing the beam at the cutting station. This additional beam splitter is transparent to visual light to allow monitoring of the cutting process. The separated part of the beam enters an infrared sensitive CCD camera recording an on-line picture of the laser beam contour which is displayed on a monitor for monitoring beam quality. The optical system focusing the expanded beam onto the surface of the workpiece has a focal length of 80 mm. It is integrated with a nozzle which directs a jet of a fluid coaxial with the laser beam at the surface of the workpiece, similar to Kobsa, US patent 5,168,143. Preferred fluids for cutting are oxygen, nitrogen, carbon dioxide, and argon, the pressure of which can be controlled to achieve optimum cutting quality and can e. g. be 0.5 MPa. The workpiece is mounted on a three coordinates stand which is controlled by a commercial CNC unit. A visual light sensitive CCD camera is used for on-line visual monitoring of the cutting process. It is located in the optical axis of the focusing system behind the additional beam splitter. The laser, the beam delivery system, and the CNC controlled stand are mounted on a granite rack to reduce vibration and to allow proper alignment of the optics.

A 0.5 mm thick sheet of stainless steel was cut with the device described above at a cutting speed of 3 m/min and at the full average laser power of n*E = 30 W. The beam quality $M^2$ as defined above was found to be 1.2. The peak brightness in this experiment calculated as described above was $B_p = 12.3 * 10^{13}$ [W/m$^2$*sr] and the average brightness was $B_{av} = 18.4 * 10^{12}$ [W/m$^2$*sr].

In a second experiment, a stainless steel sheet 0.2 mm thick was cut at a rate of 0.2 m/min. By visually watching the cutting process and setting the attenuator to the power just sufficient for coating the average laser power applied was n*E = 2.5 W. The beam quality was unchanged equal to 1.2. Hence the brightness applied in this experiment was $B_p = 1.03 * 10^{13}$ [W/m$^2$*sr] and $B_{av} = 1.53 * 10^{12}$ [W/m$^2$*sr].

The width of the HAZ was measured by a metallographic technique (polishing and etching) and was found to be 2

$\mu$m in both cases.

In further tests it was found that the beam quality was maintained also at intermediate cutting speed and average laser power such as e. g. 10 W.

In comparison to these results, the method described by Kobsa, US patent 5,168,143, with $n*E = 11$ W, $W_o = 42$ $\mu$m, and $\theta = 80$ mrad, which corresponds to an average brightness of $B_{av} = 0.4*10^{12}$ [W/m$^2$*sr], gave a HAZ significantly thicker than 5 $\mu$m, i.e. up to 25 $\mu$m.

**Claims**

1. A method for cutting through a manufactured object with a thickness of about 0.1 to 2.0 mm that includes the steps of focusing a laser beam to a plane between the upper and the lower surface of said object and expelling the material molten and/or vaporized by said laser beam from the lower surface by means of a pressurized fluid flowing coaxially with said beam, characterized by using a diode pumped solid state laser with an average brightness of greater than $10^{12}$ [W/m$^2$*sr] and a peak brightness of greater than $10^{13}$ [W/m$^2$*sr].

2. A method according to claim 1, wherein the laser beam is a pulsed leaser beam.

3. A method according to claim 1 or 2, wherein the laser beam intensity is modulated by attenuating means disposed in the optical path between the laser and the object.

4. A method according to one of claims 1 to 3, wherein the solid state laser is a rod laser.

5. A method according to one of claims 1 to 4, wherein the pumping diodes are arranged at the sides of the rod.

6. A method according to one of claims 1 to 5, wherein the distance between the focusing lens of the laser beam and the surface of the material is controlled automatically.

7. A method according to one of claims 1 to 6, wherein the Rayleigh length of the laser beam is greater than about 0.4 times the thickness of the material being cut.

8. A method according to one of claims 1 to 7, wherein the repetition rate of the laser is greater than 500 Hz.

9. A method according to one of claims 1 to 8, wherein the material of the object is a metal.

10. A method according to one of claims 1 to 8, wherein the object consists of a ceramic material.

11. A method according to one of claims 1 to 8, wherein the object consists of a composite or clad material.

12. A laser based system for precision processing and machining of materials, comprising

    a) a solid state laser, comprising, in turn, a laser cavity defined by two end mirrors, a crystal, a multiplicity of diode bars for pumping the crystal, and optical elements for improving the beam quality,
    b) a lens system for expanding, collimating, and focusing the laser beam,
    c) a workstation for holding and moving a workpiece with respect to the laser beam,
    d) a cutting nozzle for directing a jet of a pressurized fluid to the surface of said workpiece,
    wherein the laser beam has an average brightness of more than $10^{12}$ [W/m$^2$*sr] and a peak brightness of more than $10^{13}$ [W/m$^2$*sr].

13. A system according to claim 12, further comprising a beam attenuator external to the laser cavity.

14. A system according to claim 13, wherein said beam attenuator is a continuously variable beam splitter.

15. A system according to claim 14, wherein the beam splitter is a diffractive beam splitter.

16. A system according to one of claims 12 to 15, further comprising an additional beam splitter in the optical path, a CCD camera, and a monitor; said beam splitter directing a minor fraction of the beam to said CCD camera, said monitor displaying the signal emitted by said CCD camera.

17. A system according to one of claims 12 to 16, further comprising a distance sensor fixed to the focusing lens connected to a CNC unit which controls the distance between the focusing lens and the surface of the material.

18. A system according to one of claims 12 to 17 which is completely encapsulated in an outer housing, the doors of which are interlocked with the laser power supply.

**Patentansprüche**

1. Verfahren zum Schneiden eines Werkstücks mit einer Dicke von etwa 0,1 bis 2,0 mm, umfassend die Schritte Fokussieren eines Laserstrahles auf eine Fläche zwischen der oberen und der unteren Oberfläche des Werkstücks und Austreiben des von diesem Laserstrahl geschmolzenen und/oder verdampften Materials aus der unteren Oberfläche mittels eines unter Druck befindlichen koaxial mit diesem Strahl fließenden Fluids, **gekennzeichnet durch** Verwendung eines diodengepumpten Festkörperlasers mit einer mittleren Helligkeit von mehr als $10^{12}$ [W/m$^2$*sr] und einer Spitzenhelligkeit von mehr als $10^{13}$ [W/m$^2$*sr].

2. Verfahren nach Anspruch 1, wobei der Laserstrahl ein gepulster Laserstrahl ist.

3. Verfahren nach Anspruch 1 oder 2, wobei die Intensität des Laserstrahls durch abschwächende Mittel moduliert wird, die im optischen Weg zwischen dem Laser und dem Werkstück angeordnet sind.

4. Verfahren nach einem der Ansprüche 1 bis 3, wobei der Festkörperlaser ein Stablaser ist.

5. Verfahren nach einem der Ansprüche 1 bis 4, wobei die Pumpdioden an den Seiten des Stabes angeordnet sind.

6. Verfahren nach einem der Ansprüche 1 bis 5, wobei der Abstand zwischen der den Laserstrahl fokussierenden Linse und der Oberfläche des Werkstückes automatisch geregelt wird.

7. Verfahren nach einem der Ansprüche 1 bis 6, wobei die Rayleigh-Länge des Laserstrahls größer als etwa das 0,4fache der Dicke des geschnittenen Werkstücks ist.

8. Verfahren nach einem der Ansprüche 1 bis 7, wobei die Wiederholungsfrequenz des Lasers größer als 500 Hz ist.

9. Verfahren nach einem der Ansprüche 1 bis 8, wobei das Material des Werkstückes ein Metall ist.

10. Verfahren nach einem der Ansprüche 1 bis 8, wobei das Werkstück aus einem keramischen Material besteht.

11. Verfahren nach einem der Ansprüche 1 bis 8, wobei das Werkstück aus einem Verbund- oder Schichtmaterial besteht.

12. Lasersystem zur Präzisionsver- und bearbeitung von Materialien, umfassend

a) einen Festkörperlaser mit einem durch zwei Endspiegel festgelegten Laserhohlraum, einem Kristall, einer Vielzahl von Diodenleisten zum Pumpen des Kristalls und optischen Bauteilen zur Verbesserung der Strahlqualität,
b) ein Linsensystem zur Expansion, Kollimation und Fokussierung des Laserstrahls,
c) eine Arbeitsstation, um das Werkstück zu halten und relativ zum Laserstrahl zu bewegen,
d) eine Schneidedüse, um einen Strahl eines unter Druck befindlichen Fluids auf die Oberfläche des Werkstücks zu richten,
wobei der Laserstrahl eine mittlere Helligkeit von mehr als $10^{12}$ [W/m$^2$*sr] und eine Spitzenhelligkeit von mehr als $10^{13}$ [W/m$^2$*sr] besitzt.

13. System nach Anspruch 12, welches außerdem einen Strahlabschwächer außerhalb des Laserhohlraums umfaßt.

14. System nach Anspruch 13, wobei der Strahlabschwächer ein kontinuierlich veränderlicher Strahlenteiler ist.

15. System nach Anspruch 14, wobei der Strahlenteiler ein diffraktiver Strahlenteiler ist.

16. System nach einem der Ansprüche 12 bis 15, weiterhin umfassend einen zusätzlichen Strahlenteiler in dem optischen Weg, eine CCD-Kamera und einen Monitor; wobei dieser Strahlenteiler einen kleinen Teil des Strahls auf diese CCD-Kamera richtet und der Monitor das von der CCD-Kamera ausgesandte Signal anzeigt.

17. System nach einem der Ansprüche 12 bis 16, weiterhin umfassend einen an der fokussierenden Linse befestigten Abstandssensor, der mit einer CNC-Einheit verbunden ist, welche den Abstand zwischen der fokussierenden Linse und der Oberfläche des Werkstücks regelt.

18. System nach einem der Ansprüche 12 bis 17, welches von einem äußeren Gehäuse vollständig umschlossen wird, dessen Türen von der Energieversorgung des Lasers verriegelt werden.

**Revendications**

1. Un procédé pour découper un objet manufacturé d'une épaisseur d'environ 0,1 à 2,0 mm, comprenant les étapes qui consistent à focaliser un faisceau laser dans un plan situé entre la surface supérieure et la surface inférieure de cet objet, et à expulser à partir de la surface inférieure le matériau fondu et/ou évaporé par le faisceau laser, au moyen d'un fluide sous pression s'écoulant de manière coaxiale par rapport audit faisceau, caractérisé par l'utilisation d'un laser à l'état solide pompé par des diodes, avec une luminance moyenne supérieure à $10^{12}$ [W/m$^2 \cdot$ sr] et une luminance de crête supérieure à $10^{13}$ [W/m$^2 \cdot$ sr].

2. Procédé selon la revendication 1, dans lequel le faisceau laser est un faisceau laser à impulsions.

3. Procédé selon la revendication 1 ou 2, dans lequel l'intensité du faisceau laser est modulée par des moyens d'atténuation qui sont disposés dans le chemin optique entre le laser et l'objet.

4. Procédé selon l'une des revendications 1 à 3, dans lequel le laser à l'état solide est un laser en barreau.

5. Procédé selon l'une des revendications 1 à 4, dans lequel les diodes de pompage sont disposées sur les côtés du barreau.

6. Procédé selon l'une des revendications 1 à 5, dans lequel la distance entre la lentille de focalisation du faisceau laser et la surface du matériau est commandée automatiquement.

7. Procédé selon l'une des revendications 1 à 6, dans lequel la longueur de Rayleigh du faisceau laser est supérieure à environ 0,4 fois l'épaisseur du matériau qui est découpé.

8. Procédé selon l'une des revendications 1 à 7, dans lequel la cadence de répétition du laser est supérieure à 500 Hz.

9. Procédé selon l'une des revendications 1 à 8, dans lequel le matériau de l'objet est un métal.

10. Procédé selon l'une des revendications 1 à 8, dans lequel l'objet consiste en une céramique.

11. Procédé selon l'une des revendications 1 à 8, dans lequel l'objet consiste en un matériau composite ou revêtu.

12. Système basé sur un laser pour le traitement et l'usinage de précision de matériaux, comprenant

a) un laser à l'état solide comprenant à son tour une cavité laser définie par deux miroirs d'extrémités, un cristal une multiplicité de barres de diodes pour pomper le cristal, et des éléments optiques pour améliorer la qualité de faisceau,
b) un système de lentilles pour dilater, collimater et focaliser le faisceau laser,
c) un poste de travail pour maintenir et déplacer par rapport au faisceau laser une pièce à usiner,
d) une buse de découpage pour diriger sur la surface de la pièce à usiner un jet de fluide sous pression,
dans lequel le faisceau laser a une luminance moyenne supérieure à $10^{12}$ [W/m$^2 \cdot$ sr] et une luminance de crête supérieure à $10^{13}$ [W/m$^2 \cdot$ sr].

13. Système selon la revendication 12, comprenant en outre un atténuateur de faisceau extérieur à la cavité laser.

14. Système selon la revendication 13, dans lequel l'atténuateur de faisceau est un séparateur de faisceau à variation continue.

15. Système selon la revendication 14, dans lequel le séparateur de faisceau est un séparateur de faisceau à diffraction.

16. Système selon l'une des revendications 12 à 15, comprenant en outre un séparateur de faisceau supplémentaire dans le chemin optique, une caméra à CCD, et un moniteur; le séparateur de faisceau dirigeant une fraction mineure du faisceau vers la caméra à CCD, et le moniteur visualisant le signal qui est émis par la caméra à CCD.

17. Système selon l'une des revendications 12 à 16, comprenant en outre un capteur de distance fixé à la lentille de focalisation et connecté à une unité de commande numérique par ordinateur qui commande la distance entre la lentille de focalisation et la surface du matériau.

18. Système selon l'une des revendications 12 à 17, qui est entièrement enfermé dans un boîtier extérieur dont les portes sont verrouillées en relation avec l'alimentation du laser.